# EUROPEAN PATENT APPLICATION

(11) **EP 2 241 816 A2**
(43) Date of publication of application: **20.10.2010**
(21) Application number: 10159922.3
(22) Date of filing: 14.04.2010
(51) Int. Cl.: F23R 3/34, F23R 3/28, F23R 3/14

(54) **Dual orifice pilot fuel injector**

(30) Priority: 16.04.2009 US 424612
(71) Applicant: General Electric Company, Schenectady, NY 12345 (US)
(72) Inventor: Mancini, Alfred Albert, Cincinnati, OH 45241 (US); Benjamin, Michael Anthony, Cincinnati, OH 45242 (US); Hsiao, George Chia-Chun, West Chester, OH 45069 (US); Chauvette, Claude Henry, Cincinnati, OH 45243 (US)
(74) Representative: Gray, Thomas

(57) **Abstract**

A gas turbine engine fuel nozzle assembly (12) has concentric primary and secondary pilot fuel nozzles (58, 59) with circular primary and annular secondary exits (98, 100) respectively and a main fuel nozzle (61) spaced radially outwardly of the pilot fuel nozzles (58, 59). The primary and secondary pilot fuel nozzles (58, 59) include conical primary and secondary exit holes (166, 167) respectively. The secondary pilot fuel nozzle (59) is located directly adjacent to and surrounding the primary pilot fuel nozzle (58). Alternatively the secondary pilot fuel nozzle (59) may be radially spaced apart from the primary pilot fuel nozzle (58). A fuel injector (10) having a hollow stem (32) may be used to support the fuel nozzle assembly (12). A first pilot swirler (112) may be located radially outwardly of and adjacent to the dual orifice pilot fuel injector tip (57), a second pilot swirler (114) located radially outwardly of the first swirler (112), and a splitter (116) radially positioned between the first and second pilot swirlers (112, 114).

## Description

### BACKGROUND OF THE INVENTION

### FIELD OF THE INVENTION

The present invention relates to staged gas turbine engine combustion systems in which the production of undesirable combustion product components is minimized over the engine operating regime and, more particularly, to a method and apparatus for actively controlling fuel flow to a mixer assembly having a pilot mixer with primary and secondary fuel injection ports.

### DESCRIPTION OF RELATED ART

Aircraft gas turbine engine staged combustion systems have been developed to limit the production of undesirable combustion product components such as oxides of nitrogen (NOx), unburned hydrocarbons (HC), and carbon monoxide (CO) particularly in the vicinity of airports, where they contribute to urban photochemical smog problems. Gas turbine engines also are designed to be fuel efficient and have a low cost of operation.

Modem day emphasis on minimizing the production and discharge of gases that contribute to smog and to other undesirable environmental conditions, particularly those gases that are emitted from internal combustion engines, have led to different gas turbine engine combustor designs that have been developed in an effort to reduce the production and discharge of such undesirable combustion product components. Other factors that influence combustor design are the desires of users of gas turbine engines for efficient, low cost operation, which translates into a need for reduced fuel consumption while at the same time maintaining or even increasing engine output. As a consequence, important design criteria for aircraft gas turbine engine combustion systems include provisions for high combustion temperatures, in order to provide high thermal efficiency under a variety of engine operating conditions, as well as minimizing undesirable combustion conditions that contribute to the emission of particulates, and to the emission of undesirable gases, and to the emission of combustion products that are precursors to the formation of photochemical smog.

Various governmental regulatory bodies have established emission limits for acceptable levels of unburned hydrocarbons (HC), carbon monoxide (CO), and oxides of nitrogen (NOx), which have been identified as the primary contributors to the generation of undesirable atmospheric conditions. Therefore, different combustor designs have been developed to meet those criteria. For example, one way in which the problem of minimizing the emission of undesirable gas turbine engine combustion products has been attacked is through staged combustion. Staged combustors include a first stage burner for low speed and low power conditions to more closely control the character of the combustion products. A combination of first stage and second stage burners is provided for higher power outlet conditions while attempting to maintain the combustion products within the emissions limits. It will be appreciated that balancing the operation of the first and second stage burners to allow efficient thermal operation of the engine, while simultaneously minimizing the production of undesirable combustion products, is difficult to achieve. In that regard, operating at low combustion temperatures to lower the emissions of NOx, can also result in incomplete or partially incomplete combustion, which can lead to the production of excessive amounts of HC and CO, in addition to producing lower power output and lower thermal efficiency. High combustion temperature, on the other hand, although improving thermal efficiency and lowering the amount of HC and CO, often results in a higher output of NOx.

Another way that has been proposed to minimize the production of those undesirable combustion product components is to provide for more effective intermixing of the injected fuel and the combustion air. In that regard, numerous mixer designs have been proposed over the years to improve the mixing of the fuel and air. In this way, burning occurs uniformly over the entire mixture and reduces the level of HC and CO that result from incomplete combustion. Even with improved mixing, however, higher levels of undesirable NOx are formed under high power conditions when the flame temperatures are high.

One mixer design that has been utilized is known as a twin annular premixing swirler (TAPS), which is disclosed in the following U.S. Patent Nos. 6,354,072; 6,363,726; 6,367,262; 6,381,964; 6,389,815; 6,418,726; 6,453,660; 6,484,489; and, 6,865,889. It will be understood that the TAPS mixer assembly includes a pilot mixer which is supplied with fuel during the entire engine operating cycle and a main mixer which is supplied with fuel only during increased power conditions of the engine operating cycle. While improvements in the main mixer of the assembly during high power conditions (i.e., take-off and climb) are disclosed in patent applications having Serial Nos. 11/188,596, 11/188,598, and 11/188,470, modification of the pilot mixer is desired to improve operability across other portions of the engine's operating envelope (i.e., idle, approach and cruise) while maintaining combustion efficiency. To this end and in order to provide increased functionality and flexibility, the pilot mixer in a TAPS type mixer assembly has been developed and is disclosed in a patent application entitled "Pilot Mixer For Mixer Assembly Of A Gas Turbine Engine Combustor Having A Primary Fuel Injector And A Plurality Of Secondary Fuel Injection Ports." This patent application, having Serial No. 11/365,428, is owned by the assignee of the present application and hereby incorporated by reference.

Thus, there is a need to increase combustor efficiency and reduce combustion acoustic resonance for TAPS combustors at various engine operating modes and conditions. There is need to provide a TAPS mixer assembly for a gas turbine engine where the fuel injectors of the pilot mixer have an increased fuel flow range by improving the fuel flow number while not sacrificing spray stability and atomization quality of the injected fuel at low flow conditions. Sub-idle and low power conditions require a low total pilot fuel spray tip flow number and a second pilot fuel nozzle injector and circuit is needed for pilot operation to higher engine thrust conditions. Thus, it is also desirable to improve sub-idle efficiency and reduce combustion acoustic resonance. All of these concerns must be addressed while maintaining a low susceptibility to coking of the fuel injectors.

### SUMMARY OF THE INVENTION

A gas turbine engine fuel nozzle assembly includes substantially concentric primary and secondary pilot fuel nozzles (referred to as a dual orifice pilot fuel injector), a main fuel nozzle spaced radially outwardly of the primary and secondary pilot fuel nozzles, and circular primary and annular secondary exits of the primary and secondary pilot fuel nozzles respectively. An exemplary embodiment of the main fuel nozzle includes a circular or annular array of radially outwardly open fuel injection orifices.

An exemplary embodiment of the fuel nozzle assembly includes a dual orifice pilot fuel injector tip including the primary and secondary pilot fuel nozzles having conical primary and secondary exit holes respectively.

The secondary pilot fuel nozzle may be radially located directly adjacent to and surrounding the primary pilot fuel nozzle or alternatively the secondary pilot fuel nozzle may be radially spaced apart from the primary pilot fuel nozzle.

A gas turbine engine fuel injector having a hollow stem may be used to support at least one fuel nozzle assembly with the substantially concentric primary and secondary pilot fuel nozzles with the primary and secondary pilot fuel nozzles having circular primary and annular secondary exits respectively.

An exemplary embodiment of the fuel injector includes a first pilot swirler located radially outwardly of and adjacent to the dual orifice pilot fuel injector tip, a second pilot swirler located radially outwardly of the first swirler, and a splitter radially positioned between the first and second pilot swirlers. A venturi is formed in a downstream portion of the splitter and includes a converging section, a diverging section, and a throat therebetween and located downstream of the primary exit of the primary pilot fuel nozzle.

A shortened version of the splitter and the venturi has a diverging section length of the diverging section in a range of 1% to 25% of a converging section length of the converging section and a blunt splitter end of the splitter wall. Cooling for the blunt splitter end may be provided by cooling holes extending from cooling hole inlets on a radially inner surface of the splitter wall and upstream of the throat to cooling hole outlets on a downstream facing surface on the blunt splitter end of the splitter wall. Alternative circumferentially skewed cooling holes extending from cooling hole inlets on a radially inner surface of the splitter wall and upstream of the throat to cooling hole outlets on an aft or downstream facing surface on the blunt splitter end of the splitter wall may be used.

A gas turbine engine fuel supply circuit incorporating the dual orifice pilot fuel injector further includes a combined pilot primary and main fuel manifold in fuel supply connection with primary and main fuel circuits in fuel supply connection with the primary pilot and main fuel nozzles respectively. A pilot secondary fuel manifold is in fuel supply connection with a secondary fuel circuit in fuel supply connection with the secondary pilot fuel nozzle. A continuously variable pressure-actuated fuel splitter valve is operably disposed between the combined pilot primary and main fuel manifold and the primary and main fuel circuits for varying a split of fuel between the primary pilot and main fuel nozzles in the primary and main fuel circuits respectively. A continuously variable pressure-actuated fuel flow valve may be operably disposed between the pilot secondary fuel manifold and the secondary pilot fuel nozzle for controlling fuel flow from the pilot secondary fuel manifold to the secondary pilot fuel nozzle in the secondary fuel circuit.

### BRIEF DESCRIPTION OF THE DRAWINGS

There follows a detailed description of embodiments of the invention by way of example only with reference to the accompanying drawings, in which:
FIG. 1 is a cross-sectional view illustration of a gas turbine engine combustor with an exemplary embodiment of a staged fuel injector with main and dual orifice pilot nozzles.
FIG. 2 is a partial perspective view and partial cross-sectional view illustration of the fuel injector illustrated in FIG. 1.
FIG. 3 is an enlarged cross-sectional view illustration of the main and dual orifice pilot nozzles illustrated in FIG. 2.
FIG. 4 is a longitudinal sectional view illustration of an exemplary alternative embodiment of the dual orifice pilot nozzles illustrated in FIG. 3.
FIG. 5 is a longitudinal sectional view illustration of an exemplary embodiment of the dual orifice pilot nozzles illustrated in FIG. 3 with a cut back splitter having a blunt aft facing trailing edge surface.
FIG. 6 is a longitudinal sectional view illustration of an exemplary embodiment of the dual orifice pilot nozzles illustrated in FIG. 3 with axially extending cooling holes through the splitter.
FIG. 7 is an aft facing forward sectional view illustration of the splitter illustrated in FIG. 6.
FIG. 8 is a longitudinal sectional view illustration of an exemplary embodiment of the dual orifice pilot nozzles illustrated in FIG. 3 with circumferentially angled cooling holes extending through the splitter.
FIG. 9 is an aft facing forward sectional view illustration of the splitter illustrated in FIG. 8.
FIG. 10 is diagrammatical illustration of fuel supply and valving for the exemplary embodiment of the fuel injector illustrated in FIG. 1.
FIG. 11 is diagrammatical illustration of staging for the combustor illustrated in FIG. l.

### DETAILED DESCRIPTION OF THE INVENTION

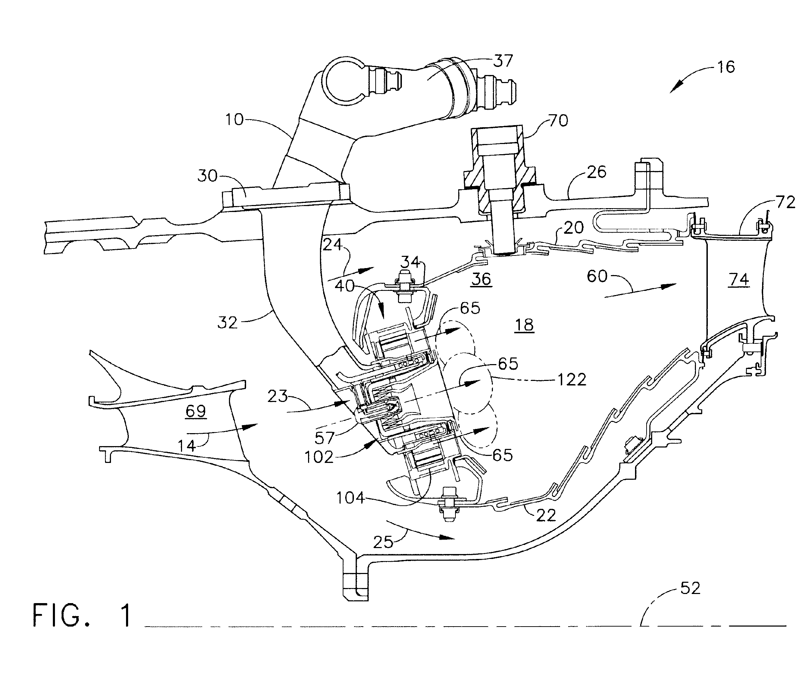

Illustrated in FIG. 1 is an exemplary embodiment of a combustor 16 including a combustion zone 18 defined between and by annular radially outer and inner liners 20, 22, respectively circumscribed about an engine centerline 52. The outer and inner liners 20, 22 are located radially inwardly of an annular combustor casing 26 which extends circumferentially around outer and inner liners 20, 22. The combustor 16 also includes an annular dome 34 mounted upstream of the combustion zone 18 and attached to the outer and inner liners 20, 22. The dome 34 defines an upstream end 36 of the combustion zone 18 and a plurality of mixer assemblies 40 (only one is illustrated) are spaced circumferentially around the dome 34. Each mixer assembly 40 includes a main mixer 104 mounted in the dome 34 and a pilot mixer 102.

Combustor 16 receives an annular stream of pressurized compressor discharge air 14 from a high pressure compressor discharge outlet 69 at what is referred to as CDP air (compressor discharge pressure air). A first portion 23 of the compressor discharge air 14 flows into the mixer assembly 40, where fuel is also injected to mix with the air and form a fuel-air mixture that is provided to the combustion zone 18 for combustion. Ignition of the fuel-air mixture 65 is accomplished by a suitable igniter 70, and the resulting combustion gases 60 flow in an axial direction toward and into an annular, first stage turbine nozzle 72. Nozzle 72 is defined by an annular flow channel that includes a plurality of radially-extending, circularly-spaced nozzle vanes 74 that turn the gases so that they flow angularly and impinge upon the first stage turbine blades (not shown) of a first turbine (not shown).

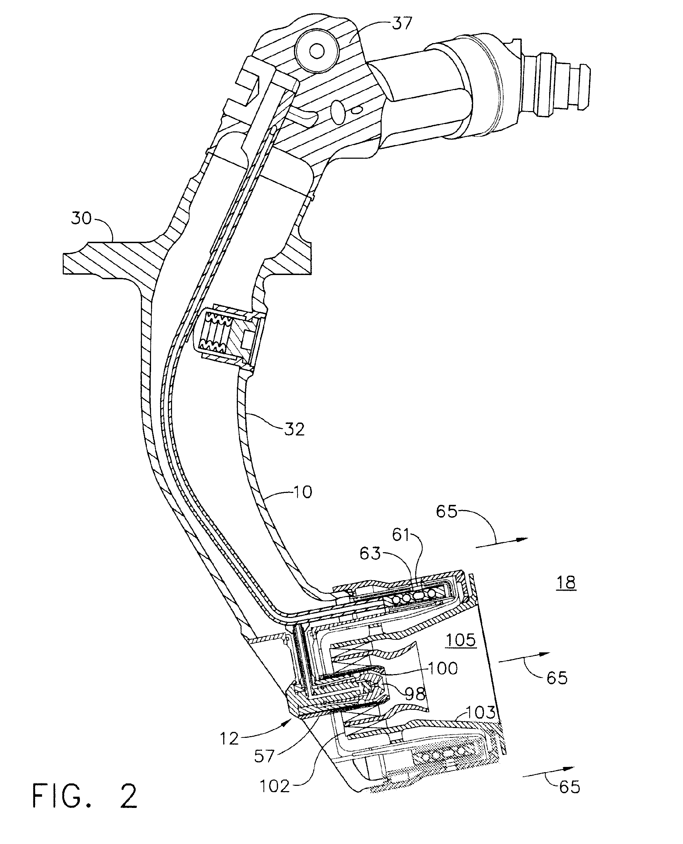

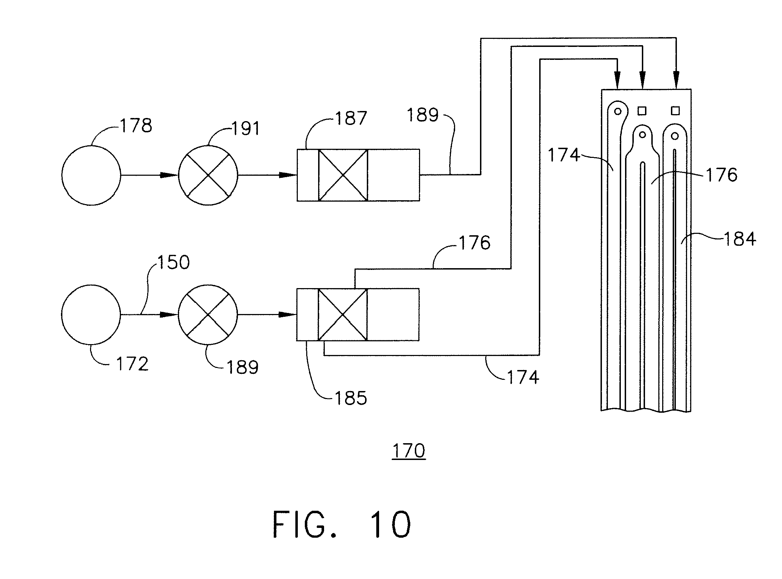

The arrows in FIG. 1 illustrate the directions in which compressor discharge air flows within combustor 16. A second portion 24 of the compressor discharge air 14 flows around the outer liner 20 and a third portion 25 of the compressor discharge air 14 flows around the inner liner 22. A fuel injector 10, further illustrated in FIG. 2, includes a nozzle mount or flange 30 adapted to be fixed and sealed to the combustor casing 26. A hollow stem 32 of the fuel injector 10 is integral with or fixed to the flange 30 (such as by brazing or welding) and includes a fuel nozzle assembly 12. The hollow stem 32 supports the fuel nozzle assembly 12 and the pilot mixer 102. A valve housing 37 at the top of the stem 32 contains valves illustrated schematically in FIG. 10 and, more particularly, discussed below.

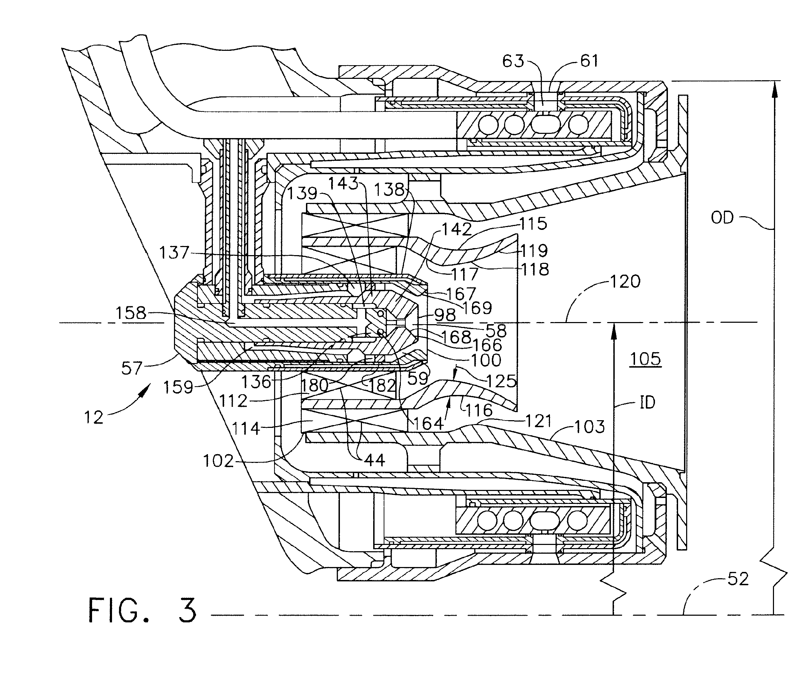

Referring to FIGS. 2 and 3, the fuel nozzle assembly 12 includes a dual orifice pilot fuel injector tip 57 having substantially concentric primary and secondary pilot fuel nozzles 58, 59. The fuel nozzle assembly 12 further includes a main fuel nozzle 61 spaced radially outwardly of the primary and secondary pilot fuel nozzles 58, 59. The secondary pilot fuel nozzle 59 is radially located directly adjacent to and surrounds the primary pilot fuel nozzle 58. The primary and secondary pilot fuel nozzles 58, 59 and main fuel nozzle 61 and the mixer assembly 40 are used to deliver the fuel air mixture 65 to the combustion zone 18. The main fuel nozzle 61 includes a circular or annular array of radially outwardly open fuel injection orifices 63. Each mixer assembly 40 has a centerline axis 120 about which the primary and secondary pilot fuel nozzles 58, 59 and main fuel nozzle 61 are circumscribed.

A centerbody 103 is radially disposed between and supports the primary and secondary pilot fuel nozzles 58, 59 and the main fuel nozzle 61. The centerbody 103 surrounds the pilot mixer 102 and defines a chamber 105 that is in flow communication with, and downstream from, the pilot mixer 102. The pilot mixer 102 radially supports the dual orifice pilot fuel injector tip 57 at a radially inner diameter ID and the centerbody 103 radially supports the main fuel nozzle 61 at a radially outer diameter OD. The main fuel nozzle 61 is disposed within the main mixer 104 of the mixer assembly 40 and the dual orifice pilot fuel injector tip 57 is disposed within the pilot mixer 102.

The pilot mixer 102 includes a first pilot swirler 112 located radially outwardly of and adjacent to the dual orifice pilot fuel injector tip 57, a second pilot swirler 114 located radially outwardly of the first swirler 112, and a splitter 116 positioned therebetween. The splitter 116 extends downstream of the dual orifice pilot fuel injector tip 57 and a venturi 118 is formed in a downstream portion 115 of the splitter 116. The venturi 118 includes a converging section 117, a diverging section 119, and a throat 121 therebetween. The throat 121 is located downstream of a primary exit 98 of the primary pilot fuel nozzle 58. The splitter 116 has a wall thickness 125 that tapers down aft or downstream of the throat 121 through the converging section 117. The first and second pilot swirlers 112, 114 are generally oriented parallel to a centerline axis 120 of the dual orifice pilot fuel injector tip 57 and the mixing assembly 40. The first and second pilot swirlers 112, 114 include a plurality of swirling vanes 44 (illustrated schematically in FIGS. 2 and 3) for swirling air traveling therethrough. Fuel and air are provided to pilot mixer 102 at all times during the engine operating cycle so that a primary combustion zone 122 (illustrated in FIG. 1) is produced within a central portion of combustion zone 18.

The primary and secondary pilot fuel nozzles 58, 59 have circular primary and annular secondary exits 98, 100 respectively, are operable to inject fuel in a generally downstream direction, and are often referred to as a dual orifice nozzle. The main fuel nozzle 61 is operable to inject fuel in a generally radially outwardly direction through the circular array of radially outwardly open fuel injection orifices 63. The primary pilot fuel nozzle 58 includes a primary fuel supply passage 158 which feeds fuel to a primary annular manifold 138 located adjacent a downstream end 142 of the primary pilot fuel nozzle 58. The secondary pilot fuel nozzle 59 includes a secondary fuel supply passage 159 which flows fuel to a secondary annular manifold 139 located adjacent a downstream end 143 of the secondary pilot fuel nozzle 59.

Fuel is fed from the manifold 138 into a primary fuel swirler 136 at the downstream end 142. The exemplary primary fuel swirler 136 illustrated herein is a cylindrical plug having downstream and circumferentially angled fuel injection holes 164 to pre-film a conical primary exit hole 166 of the primary pilot fuel nozzle 58 with fuel which improves atomization of the fuel. The conical primary exit hole 166 culminates at the circular primary exit 98. The primary fuel swirler 136 swirls the fuel and centrifugal force of the swirling fuel forces the fuel against a primary conical surface 168 of the conical primary exit hole 166 thus pre-filming the fuel along the primary conical surface 168.

Fuel flows from the secondary annular manifold 139 through a secondary fuel swirler 137 in the secondary fuel supply passage 159 at the downstream end 143 of the secondary pilot fuel nozzle 59. The exemplary secondary fuel swirler 137, as illustrated herein, is a circular array 180 of fuel swirling vanes 182 operable to pre-film a conical secondary exit hole 167 of the secondary pilot fuel nozzle 59 with fuel which improves atomization of the fuel. The conical secondary exit hole 167 culminates at the annular secondary exit 100. The secondary fuel swirler 137 swirls the fuel and centrifugal force of the swirling fuel forces it against a secondary conical surface 169 of the conical secondary exit hole 167 thus pre-filming the fuel along the secondary conical surface 169.

The dual orifice nozzle provides improved atomization, particularly for starting and relight after a high power fuel cut, relative to radial fuel injection of disclosed in the prior art in the U.S. patent application entitled "Pilot Mixer For Mixer Assembly Of A Gas Turbine Engine Combustor Having A Primary Fuel Injector And A Plurality Of Secondary Fuel Injection Ports." having Serial No. 11/365,428 referenced above. Concentric annular fuel films from the concentric primary and secondary pilot fuel nozzles 58, 59 merge together and the combined fuel is atomized by an air stream from the pilot mixer 102 which is at its maximum velocity in a plane in the vicinity of the annular secondary exit 100 and has significantly higher air velocity than at the axial plane used in the prior art.

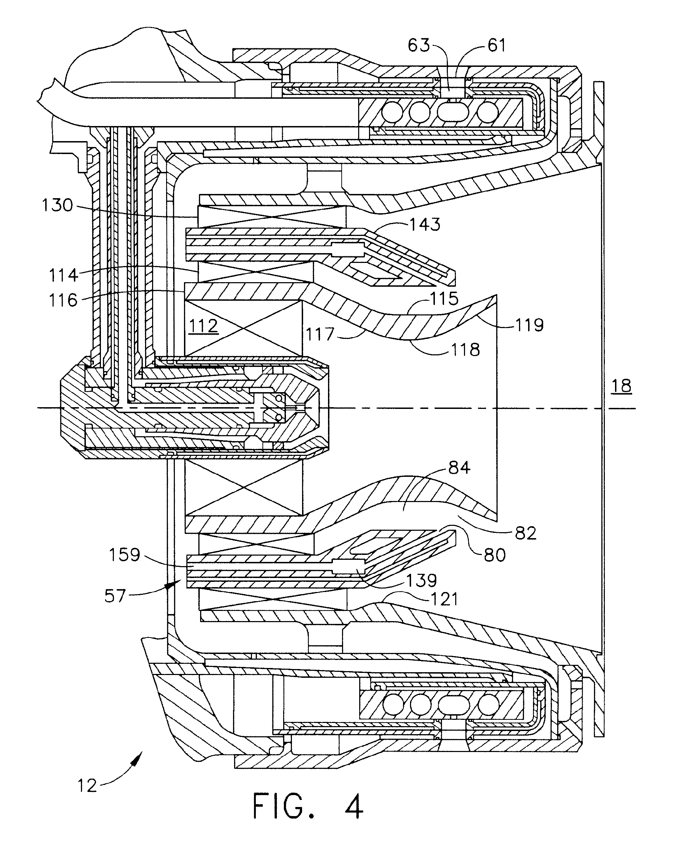

Illustrated in FIG. 4, is an alternative dual orifice pilot fuel injector tip 57 having concentric primary and secondary pilot fuel nozzles 58, 59. The fuel injector 10 further includes a main fuel nozzle 61 spaced radially outwardly of the primary and secondary pilot fuel nozzles 58, 59. The primary and secondary pilot fuel nozzles 58, 59 and main fuel nozzle 61 and the mixer assembly 40 (not fully illustrated in FIG. 4, see FIG. 1) are used to deliver a mixture of fuel and air to the combustion zone 18. The main fuel nozzle 61 includes a circular or annular array of radially outwardly open fuel injection orifices 63.

The primary pilot fuel nozzle 58 of the alternative dual orifice pilot fuel injector tip 57 includes a primary fuel supply passage 158 which feeds fuel to a primary annular manifold 138 located adjacent a downstream end 142 of the primary pilot fuel nozzle 58. The secondary pilot fuel nozzle 59 is annular and generally concentric to the primary pilot fuel nozzle 58. The primary and secondary pilot fuel nozzles 58, 59 are spaced radially apart. The first pilot swirler 112 is located radially outwardly of, adjacent to, and surrounds the primary pilot fuel nozzle 58. The second pilot swirler 114 is located radially outwardly of the first swirler 112 and the splitter 116 is radially positioned between the first and second pilot swirlers 112, 114. The secondary pilot fuel nozzle 59 is located radially outwardly of, adjacent to, and surrounds the second pilot swirler 114. A third pilot swirler 130 is located radially outwardly of, adjacent to, and surrounds the secondary pilot fuel nozzle 59.

The splitter 116 extends downstream of the dual orifice pilot fuel injector tip 57 to form a venturi 118 in a downstream portion 115 of the splitter 116. The venturi 118 includes a converging section 117, a diverging section 119, and a throat 121 therebetween. The secondary pilot fuel nozzle 59 includes a secondary fuel supply passage 159 which flows fuel to a secondary annular manifold 139 located in the secondary fuel supply passage 159 near the downstream end 143 of the secondary pilot fuel nozzle 59. The secondary fuel supply passage 159 culminates at an annular secondary pilot orifice 80 at a downstream end 82 of an annular third pilot passage 84 within which the third pilot swirler 130 is disposed.

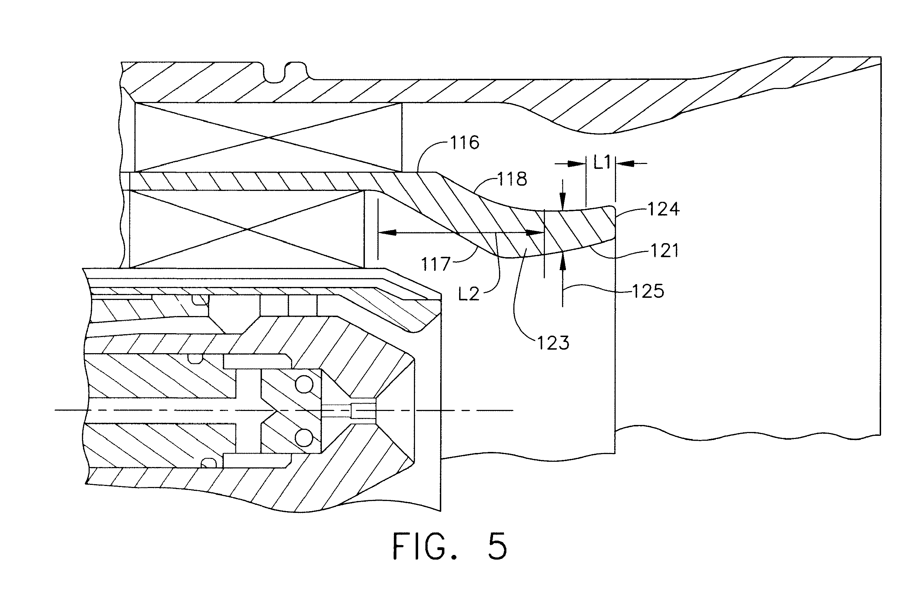

Illustrated in FIG. 5, is another alternative dual orifice pilot fuel injector tip 57. The pilot mixer 102 includes a first pilot swirler 112 located radially outwardly of and adjacent to the dual orifice pilot fuel injector tip 57, a second pilot swirler 114 located radially outwardly of the first swirler 112, and a splitter 116 positioned therebetween. The splitter 116 extends downstream of the dual orifice pilot fuel injector tip 57 to form a venturi 118 at a downstream portion. The venturi 118 includes a converging section 117 followed by a throat 121 but there is a very small or no diverging section. If there is a very small diverging section 119 then it has a fraction of the length of the converging section 117 as illustrated in FIG. 5. The splitter 116 may be described as having a diverging section length L1 of the diverging section 119 that is in a range of 1% to 25% of a converging section length L2 of the converging section 117. The splitter 116 has a splitter wall 123 with a wall thickness 125 that is substantially constant through the throat 121 to a blunt splitter end 124 of the splitter wall 123 which is near the throat 121.

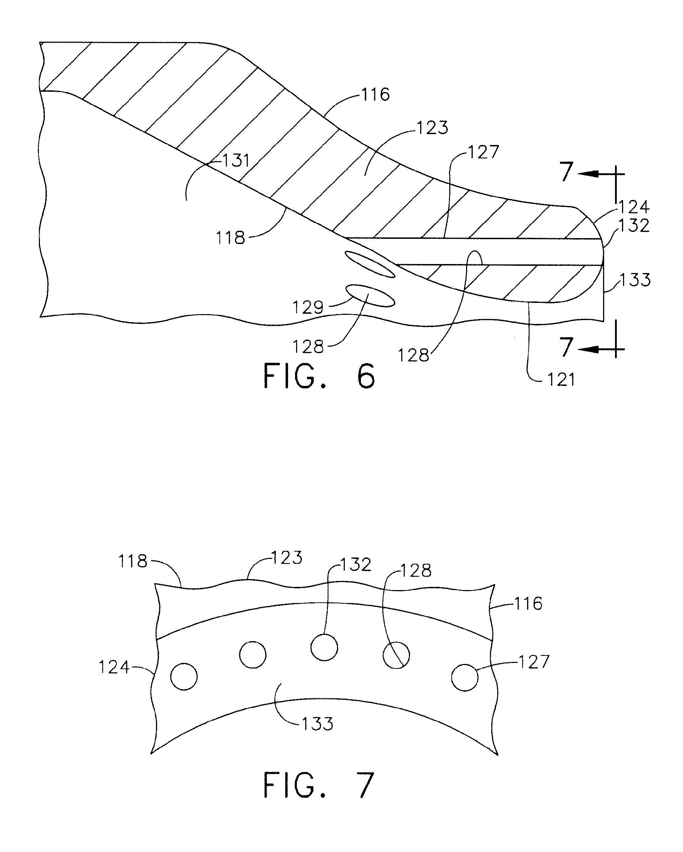

Illustrated in FIGS. 6 and 7, is a cooling means 127 for cooling the blunt splitter end 124 of the venturi 118 and splitter 116 illustrated in FIG. 5. The embodiment of the cooling means illustrated in FIGS. 6 and 7 includes axially extending cooling holes 128 extending through the splitter wall 123 near the throat 121. The cooling holes 128 extend from cooling hole inlets 129 on a radially inner surface 131 of the splitter wall 123 downstream of the throat 121 to cooling hole outlets 132 on an aft or downstream facing surface 133 on the blunt splitter end 124, which may be rounded as illustrated in FIG. 6, of the splitter wall 123.

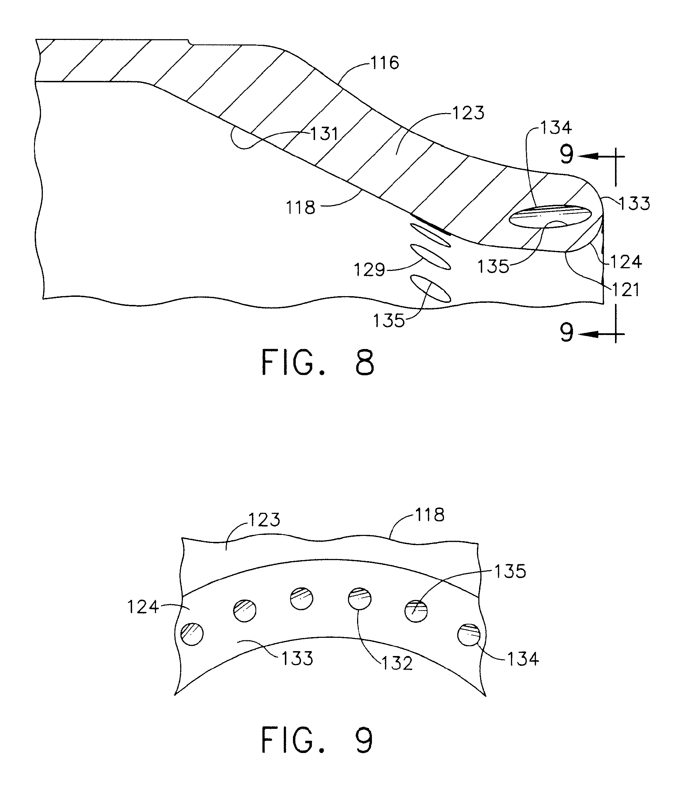

Illustrated in FIGS. 8 and 9, is an alternative cooling means 134 for cooling the blunt splitter end 124 of the venturi 118 and splitter 116 illustrated in FIG. 5. The embodiment of the cooling means illustrated in FIGS. 8 and 9 includes axially extending circumferentially skewed cooling holes 135 extending through the splitter wall 123 at the throat 121. The circumferentially skewed cooling holes 135 extend from cooling hole inlets 129 on a radially inner surface 131 of the splitter wall 123 at the throat 121 to cooling hole outlets 132 on an aft or downstream facing surface 133 on the blunt splitter end 124 of the splitter wall 123.

Illustrated in FIG. 10 is an exemplary fuel supply circuit 170 including a combined pilot primary and main fuel manifold 172 for supplying fuel 150 to primary and main fuel circuits 174, 176 for the primary pilot and main fuel nozzles 58, 61 respectively in the fuel nozzle assembly 12 of the fuel injectors 10 (illustrated in the previous FIGS.). The fuel supply circuit 170 further includes a pilot secondary fuel manifold 178 for supplying fuel to a secondary fuel circuit 184 for the secondary pilot fuel nozzle 59 in the fuel injectors 10. A continuously variable pressure-actuated fuel splitter valve 185 is used to vary the split of fuel going from the combined pilot primary and main fuel manifold 172 to the primary and main fuel circuits 174, 176 for the primary pilot and main fuel nozzles 58, 61 respectively in the fuel injectors 10. A continuously variable pressure-actuated fuel flow valve 187 controls fuel flow from the pilot secondary fuel manifold 178 to the secondary fuel circuit 184 for the secondary pilot fuel nozzle 59 in the fuel injectors 10. A first check valve 189 is disposed between the combined pilot primary and main fuel manifold 172 and the continuously variable pressure-actuated fuel splitter valve 185. A second check valve 191 is disposed between the pilot secondary fuel manifold 178 and the fuel flow valve 187. The check valves insure that the fuel manifolds are fully filled with fuel at required pressures before entering the continuously variable pressure-actuated fuel splitter valve 185 and the fuel flow valve 187.

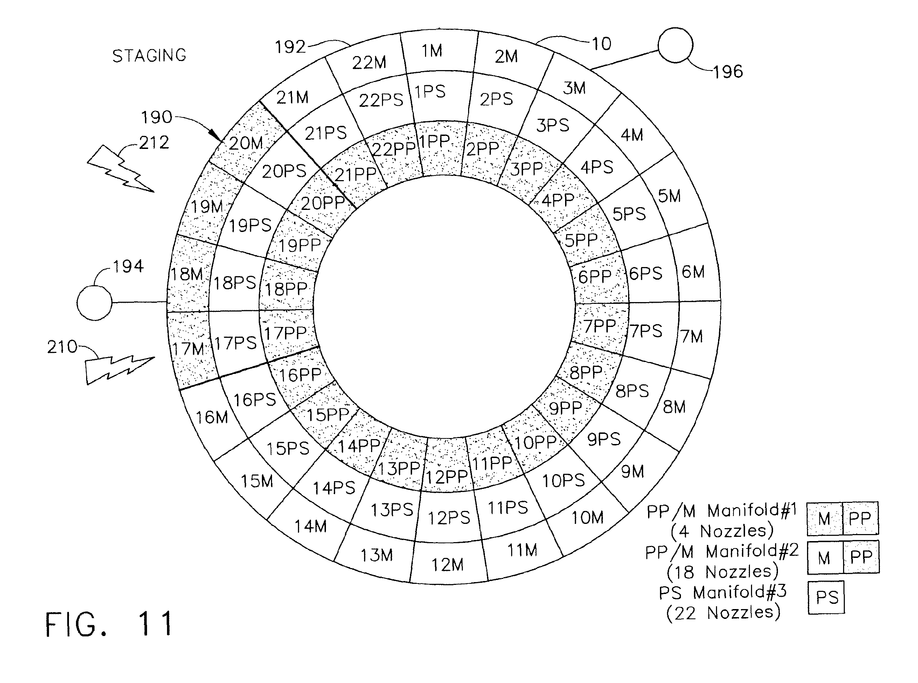

First and second sets 190, 192 of the fuel nozzle injectors 10 are used for staging as graphically illustrated in FIG. 11. Primary pilot fuel nozzles are denoted as PP, secondary pilot fuel nozzles are denoted as PS, and main fuel nozzle are denoted as M. The first set 190 uses a first fuel manifold 194 for the combined pilot primary and main fuel manifold 172, illustrated in FIG. 10, for supplying fuel to primary and main fuel circuits 174, 176 for the primary pilot and main fuel nozzles 58, 61 respectively in the fuel nozzle injectors 10 in the first set 190 at a first fuel rate. The exemplary embodiment of the first set 190 is illustrated herein as having four fuel injectors 10 and fuel supply circuits 170. The second set 192 uses a second fuel manifold 196 for the combined pilot primary and main fuel manifold 172 for supplying fuel to primary and main fuel circuits 174, 176 for the fuel injectors 10 in the second set 192 a second fuel rate. The exemplary embodiment of the second set 192 is illustrated herein as having eighteen fuel injectors 10. The pilot secondary fuel manifold 178 is used to supply fuel to all twenty two fuel nozzle assemblies 12 and fuel supply circuits 170 of both the first and second sets 190, 192 of the fuel injectors 10.

The first set 190 of the four fuel injectors 10 function as nozzles and located in the vicinity and close to first and second igniters 210, 212 in the combustor. The primary pilot fuel nozzles 58 in the first set 190 are operated at a relatively high fuel flow number of about 9.25 in one exemplary embodiment of the combustor for start and low power fuel enrichment. The primary pilot fuel nozzles 58 in the second set 192 are operated at a relatively low fuel flow number of about 3.7 in the exemplary embodiment of the combustor for sub-idle power levels. This provides improved sub-idle efficiency, altitude relight capability, and low power operability.

The present invention has been described in an illustrative manner. It is to be understood that the terminology which has been used is intended to be in the nature of words of description rather than of limitation. While there have been described herein, what are considered to be preferred and exemplary embodiments of the present invention, other modifications of the invention shall be apparent to those skilled in the art from the teachings herein and, it is, therefore, desired to be secured in the appended claims all such modifications as fall within the true spirit and scope of the invention.

For completeness, various aspects of the invention are now set out in the following numbered clauses:
1. A gas turbine engine fuel nozzle assembly comprising:
   substantially concentric primary and secondary pilot fuel nozzles,
   a main fuel nozzle spaced radially outwardly of the primary and secondary pilot fuel nozzles, and
   the primary and secondary pilot fuel nozzles having circular primary and annular secondary exits respectively.
2. A fuel nozzle assembly as claimed in clause, further comprising the main fuel nozzle including a circular or annular array of radially outwardly open fuel injection orifices.
3. A fuel nozzle assembly as claimed in clause 1, further comprising a dual orifice pilot fuel injector tip including the primary and secondary pilot fuel nozzles.
4. A fuel nozzle assembly as claimed in clause 3, further comprising the primary and secondary pilot fuel nozzles having conical primary and secondary exit holes.
5. A fuel nozzle assembly as claimed in clause 4, further comprising the main fuel nozzle including a circular or annular array of radially outwardly open fuel injection orifices.
6. A fuel nozzle assembly as claimed in clause 1, further comprising the secondary pilot fuel nozzle being radially located directly adjacent to and surrounding the primary pilot fuel nozzle.
7. A fuel nozzle assembly as claimed in clause 6, further comprising a dual orifice pilot fuel injector tip including the primary and secondary pilot fuel nozzles.
8. A fuel nozzle assembly as claimed in clause 7, further comprising the primary and secondary pilot fuel nozzles having conical primary and secondary exit holes.
9. A fuel nozzle assembly as claimed in clause 8, further comprising the main fuel nozzle including a circular or annular array of radially outwardly open fuel injection orifices.
10. A fuel nozzle assembly as claimed in clause 1, further comprising the secondary pilot fuel nozzle being radially spaced apart from the primary pilot fuel nozzle.
11. A gas turbine engine fuel injector comprising:
   a hollow stem supporting at least one fuel nozzle assembly,
   the fuel nozzle assembly having substantially concentric primary and secondary pilot fuel nozzles and a main fuel nozzle spaced radially outwardly of the primary and
   secondary pilot fuel nozzles, and
   the primary and secondary pilot fuel nozzles having circular primary and annular secondary exits respectively.
12. A fuel injector as claimed in clause 11, further comprising the main fuel nozzle including a circular or annular array of radially outwardly open fuel injection orifices.
13. A fuel injector as claimed in clause 11, further comprising a dual orifice pilot fuel injector tip including the primary and secondary pilot fuel nozzles.
14. A fuel injector as claimed in clause 13, further comprising the primary and secondary pilot fuel nozzles having conical primary and secondary exit holes.
15. A fuel injector as claimed in clause 14, further comprising:
   a first pilot swirler located radially outwardly of and adjacent to the dual orifice pilot fuel injector tip,
   a second pilot swirler located radially outwardly of the first swirler, and
   a splitter radially positioned between the first and second pilot swirlers.
16. A fuel injector as claimed in clause 15, further comprising:
   a venturi formed in a downstream portion of the splitter;
   the venturi including a converging section, a diverging section, and a throat therebetween; and
   the throat being located downstream of the primary exit of the primary pilot fuel nozzle.
17. A fuel injector as claimed in clause 15, further comprising:
   a venturi formed in a downstream portion of the splitter;
   the venturi including a converging section, a diverging section, and a throat therebetween;
   a diverging section length of the diverging section in a range of 1% to 25% of a converging section length of the converging section;
   a blunt splitter end of the splitter wall; and
   the throat being located downstream of the primary exit of the primary pilot fuel nozzle.
18. A fuel injector as claimed in clause 17, further comprising a cooling means for cooling the blunt splitter end.
19. A fuel injector as claimed in clause 18, further comprising the cooling means including cooling holes extending from cooling hole inlets on a radially inner surface of the splitter wall and upstream of the throat to cooling hole outlets on a downstream facing surface on the blunt splitter end of the splitter wall.
20. A fuel injector as claimed in clause 18, further comprising the cooling means including circumferentially skewed cooling holes extending from cooling hole inlets on a radially inner surface of the splitter wall and upstream of the throat to cooling hole outlets on an aft or downstream facing surface on the blunt splitter end of the splitter wall.
21. A fuel injector as claimed in clause 10, further comprising:
   the secondary pilot fuel nozzle being radially spaced apart from the primary pilot fuel nozzle;
   a first pilot swirler located radially outwardly of, adjacent to, and surrounding the primary pilot fuel nozzle;
   a second pilot swirler located radially outwardly of the first pilot swirler; and
   a third pilot swirler located radially outwardly of, adjacent to, and surrounding the secondary pilot fuel nozzle.
22. A fuel injector as claimed in clause 21, further comprising a splitter radially positioned between the first and second pilot swirlers.
23. A fuel injector as claimed in clause 22, further comprising the main fuel nozzle including a circular or annular array of radially outwardly open fuel injection orifices.
24. A fuel injector as claimed in clause 22, further comprising:
   a venturi formed in a downstream portion of the splitter;
   the venturi including a converging section, a diverging section, and a throat therebetween; and
   the throat being located downstream of the primary exit of the primary pilot fuel nozzle.
25. A fuel injector as claimed in clause 22, further comprising:
   a venturi formed in a downstream portion of the splitter;
   the venturi including a converging section, a diverging section, and a throat therebetween;
   a diverging section length of the diverging section in a range of 1% to 25% of a converging section length of the converging section;
   a blunt splitter end of the splitter wall; and
   the throat being located downstream of the primary exit of the primary pilot fuel nozzle.
26. A fuel injector as claimed in clause 25, further comprising a cooling means for cooling the blunt splitter end.
27. A fuel injector as claimed in clause 26, further comprising the cooling means including cooling holes extending from cooling hole inlets on a radially inner surface of the splitter wall and upstream of the throat to cooling hole outlets on a downstream facing surface on the blunt splitter end of the splitter wall.
28. A fuel injector as claimed in clause 26, further comprising the cooling means including circumferentially skewed cooling holes extending from cooling hole inlets on a radially inner surface of the splitter wall and upstream of the throat to cooling hole outlets on an aft or downstream facing surface on the blunt splitter end of the splitter wall.
29. A gas turbine engine fuel supply circuit comprising:
   substantially concentric primary and secondary pilot fuel nozzles,
   a main fuel nozzle spaced radially outwardly of the primary and secondary pilot fuel nozzles,
   the primary and secondary pilot fuel nozzles having circular primary and annular secondary exits respectively,
   a combined pilot primary and main fuel manifold in fuel supply connection with primary and main fuel circuits in fuel supply connection with the primary pilot and main fuel nozzles respectively,
   a pilot secondary fuel manifold in fuel supply connection with a secondary fuel circuit in fuel supply connection with the secondary pilot fuel nozzle, and
   a continuously variable pressure-actuated fuel splitter valve operably disposed between the combined pilot primary and main fuel manifold and the primary and main fuel circuits for varying a split of fuel between the primary pilot and main fuel nozzles in the primary and main fuel circuits respectively.
30. A gas turbine engine fuel supply circuit as claimed in clause 29, further comprising the main fuel nozzle including a circular or annular array of radially outwardly open fuel injection orifices.
31. A gas turbine engine fuel supply circuit as claimed in clause 29, further comprising a dual orifice pilot fuel injector tip including the primary and secondary pilot fuel nozzles.
32. A gas turbine engine fuel supply circuit as claimed in clause 31, further comprising the primary and secondary pilot fuel nozzles having conical primary and secondary exit holes.
33. A gas turbine engine fuel supply circuit as claimed in clause 32, further comprising the secondary pilot fuel nozzle being radially located directly adjacent to and surrounding the primary pilot fuel nozzle.
34. A gas turbine engine fuel supply circuit as claimed in clause 33, further comprising the secondary pilot fuel nozzle being radially spaced apart from the primary pilot fuel nozzle.
35. A gas turbine engine fuel supply circuit as claimed in clause 29, further comprising a continuously variable pressure-actuated fuel flow valve operably disposed between the pilot secondary fuel manifold and the secondary pilot fuel nozzle for controlling fuel flow from the pilot secondary fuel manifold to the secondary pilot fuel nozzle in the secondary fuel circuit.
36. A gas turbine engine fuel supply circuit as claimed in clause 35, further comprising a dual orifice pilot fuel injector tip including the primary and secondary pilot fuel nozzles.
37. A gas turbine engine fuel supply circuit as claimed in clause 36, further comprising the primary and secondary pilot fuel nozzles having conical primary and secondary exit holes.
38. A gas turbine engine fuel supply circuit as claimed in clause 37, further comprising the secondary pilot fuel nozzle being radially located directly adjacent to and surrounding the primary pilot fuel nozzle.
39. A gas turbine engine fuel supply circuit as claimed in clause 37, further comprising the secondary pilot fuel nozzle being radially spaced apart from the primary pilot fuel nozzle.

## Claims

1. A gas turbine engine fuel nozzle assembly (12) comprising:
substantially concentric primary and secondary pilot fuel nozzles (58, 59),
a main fuel nozzle (61) spaced radially outwardly of the primary and secondary pilot fuel nozzles (58, 59), and
the primary and secondary pilot fuel nozzles (58, 59) having circular primary and annular secondary exits (98, 100) respectively.

2. A fuel nozzle assembly (12) as claimed in claim 1, further comprising the main fuel nozzle (61) including a circular or annular array of radially outwardly open fuel injection orifices (63).

3. A fuel nozzle assembly (12) as claimed in claim 1, further comprising a dual orifice pilot fuel injector tip (57) including the primary and secondary pilot fuel nozzles (58, 59).

4. A fuel nozzle assembly (12) as claimed in claim 3, further comprising the primary and secondary pilot fuel nozzles (58, 59) having conical primary and secondary exit holes (166, 167).

5. A fuel nozzle assembly (12) as claimed in claim 4, further comprising the main fuel nozzle (61) including a circular or annular array of radially outwardly open fuel injection orifices (63).

6. A fuel nozzle assembly (12) as claimed in any of the preceding claims, further comprising the secondary pilot fuel nozzle (59) being radially located directly adjacent to and surrounding the primary pilot fuel nozzle (58).

7. A fuel nozzle assembly (12) as claimed in any of the preceding claims, further comprising the secondary pilot fuel nozzle (59) being radially spaced apart from the primary pilot fuel nozzle (58).

8. A gas turbine engine fuel injector (10) comprising:
a hollow stem (32) supporting at least one fuel nozzle assembly (12),
the fuel nozzle assembly (12) having substantially concentric primary and secondary pilot fuel nozzles (58, 59) and a main fuel nozzle (61) spaced radially outwardly of the primary and secondary pilot fuel nozzles (58, 59), and
the primary and secondary pilot fuel nozzles (58, 59) having circular primary and annular secondary exits (98, 100) respectively.

9. A fuel injector (10) as claimed in claim 8, further comprising:
a dual orifice pilot fuel injector tip (57) including the primary and secondary pilot fuel nozzles (58, 59),
the primary and secondary pilot fuel nozzles (58, 59) having conical primary and secondary exit holes (166, 167).

10. A fuel injector (10) as claimed in Claim 9, further comprising:
a first pilot swirler (112) located radially outwardly of and adjacent to the dual orifice pilot fuel injector tip (57),
a second pilot swirler (114) located radially outwardly of the first swirler (112), and
a splitter (116) radially positioned between the first and second pilot swirlers (112, 114).

11. A fuel injector as claimed in claim 8, further comprising:
a venturi formed in a downstream portion of the splitter;
the venturi including a converging section, a diverging section, and a throat therebetween; and
the throat being located downstream of the primary exit of the primary pilot fuel nozzle.

12. A fuel injector as claimed in claim 8, further comprising:
a venturi formed in a downstream portion of the splitter;
the venturi including a converging section, a diverging section, and a throat therebetween;
a diverging section length of the diverging section in a range of 1% to 25% of a converging section length of the converging section;
a blunt splitter end of the splitter wall; and
the throat being located downstream of the primary exit of the primary pilot fuel nozzle.

13. A fuel injector as claimed in claim 12, further comprising a cooling means for cooling the blunt splitter end.

14. A fuel injector as claimed in claim 13, further comprising the cooling means including cooling holes extending from cooling hole inlets on a radially inner surface of the splitter wall and upstream of the throat to cooling hole outlets on a downstream facing surface on the blunt splitter end of the splitter wall.

15. A fuel injector as claimed in claim 13, further comprising the cooling means including circumferentially skewed cooling holes extending from cooling hole inlets on a radially inner surface of the splitter wall and upstream of the throat to cooling hole outlets on an aft or downstream facing surface on the blunt splitter end of the splitter wall.
